# EUROPEAN PATENT SPECIFICATION

(11) **EP 4 303 722 B1**
(45) Date of publication and mention of the grant of the patent: **25.03.2026**
(21) Application number: 23183294.0
(22) Date of filing: 04.07.2023
(51) Int. Cl.: G06F 8/65, B63H 20/00, B63H 21/21

(54) **METHOD OF REWRITING PROGRAMS OF PLURALITY OF ELECTRONIC DEVICES IN WATERCRAFT SYSTEM AND WATERCRAFT SYSTEM**
VERFAHREN ZUM UMSCHREIBEN VON PROGRAMMEN MEHRERER ELEKTRONISCHER VORRICHTUNGEN IN EINEM WASSERFAHRZEUGSYSTEM UND WASSERFAHRZEUGSYSTEM
PROCÉDÉ DE RÉÉCRITURE DE PROGRAMMES D'UNE PLURALITÉ DE DISPOSITIFS ÉLECTRONIQUES DANS UN SYSTÈME DE BATEAU ET SYSTÈME DE BATEAU

(30) Priority: 08.07.2022 JP 2022110637
(43) Date of publication of application: 10.01.2024
(73) Proprietor: Yamaha Hatsudoki Kabushiki Kaisha, Iwata-shi, Shizuoka 438-8501 (JP)
(72) Inventor: Bamba, Takaaki, Iwata-shi, Shizuoka, 438-8501 (JP)
(74) Representative: Grünecker Patent- und Rechtsanwälte PartG mbB

(56) References cited:
- CN-A- 111 614 711
- US-B2- 6 872 106
- WIKIPEDIA: "Unified Diagnostic Services", 26 April 2022 (2022-04-26), pages 1 - 6, XP093234348, Retrieved from the Internet <URL:https://en.wikipedia.org/w/index.php?title=Unified_Diagnostic_Services&oldid=1084759001> [retrieved on 20241213]

## Description

The present invention relates to a method of rewriting programs of a plurality of electronic devices in a watercraft system and also relates to a watercraft system.

Prior art document CN 111 614 711 A discloses a software update device provided with an acquisition part, an update control part and an update mode determination part. The acquisition part acquires the new version of the software provided through the network. The update control unit uses the new version of the software acquired by the acquisition unit to separately update the software of a plurality of electronic control devices mounted on the vehicle. The update mode determination unit selectively determines an update mode when performing the software update on a plurality of the electronic control devices from a parallel update mode and a sequential update mode. The parallel update mode is to update multiple electronic control devices in parallel. The update mode is an update mode in which the software update is executed on each of the electronic control devices. The sequential update mode is an update mode in which the software update is executed on a plurality of the electronic control devices in sequence. The update control unit performs the software update on the plurality of electronic control devices respectively according to the update mode determined by the update mode determination unit.

Prior art document US 6,872,106 B2 discloses a watercraft system including a first marine propulsion device, a second marine propulsion device, and a communication network. The first marine propulsion device includes the first electronic control device and the second marine propulsion device including the second electronic control device, wherein the communication network connects the first electronic control device and the second electronic control device therethrough.

A marine propulsion device such as an outboard motor is mounted to a watercraft. The marine propulsion device includes an electronic control device. The electronic control device is connected to a communication network such as a CAN (Controller Area Network). For example, as described in JP 2020-179748 A, when a program of an electronic control device is updated, a computer for rewriting the program is connected to the electronic control device through a communication network. The computer rewrites the program of the electronic control device by utilizing a rewriting protocol such as UDS (Unified Diagnostic Services). In this case, the computer specifies an identifier of the electronic control device and vice versa; accordingly, a peer-to-peer communication is established therebetween. Under the condition, data transmission and reception are made therebetween so as to rewrite the program.

There is a type of watercraft provided with a system including a plurality of marine propulsion devices. In the system described herein, a plurality of electronic control devices of the plurality of marine propulsion devices are connected to each other through a communication network. The electronic control devices are common in function to each other but are identified as discrete devices in the communication network. Because of this, identifiers are uniquely assigned to the electronic control devices, respectively.

In the system including the marine propulsion devices as described above, when the programs of the electronic control devices are rewritten, the computer is configured to rewrite the programs of the electronic control devices, separately. Because of this, a length of time required for rewriting the programs inevitably increases with increase in number of the electronic control devices.

It is an object of the present invention to provide a method of rewriting a program of at least a first electronic control device and a program of at least a second electronic control device in a watercraft system and/or a watercraft system that can reduce a length of time required for rewriting programs of a plurality of electronic control devices in a system for a watercraft including a plurality of marine propulsion devices. According to the present invention said object is solved by a method of rewriting a program of at least a first electronic control device and a program of at least a second electronic control device in a watercraft system having the features of independent claim 1. Moreover, according to the present
invention said object is also solved by a watercraft system having the features of independent claim 4. Preferred embodiments are laid down in the dependent claims.

A method according to an aspect of the present teaching relates to a method of rewriting a program of a first electronic control device and a program of a second electronic control device in a watercraft system. The watercraft system includes a first marine propulsion device, a second marine propulsion device, and a communication network. The first marine propulsion device includes the first electronic control device. The second marine propulsion device includes the second electronic control device. The communication network connects the first electronic control device and the second electronic control device therethrough. The method includes determining whether or not to execute batch rewriting of the programs with respect to each of the first and second electronic control devices, transmitting data for rewriting each of the programs to the each of the first and second electronic control devices with a common identifier preliminarily set to each of the first and second electronic control devices through the communication network when the batch rewriting of the programs is determined to be executed with respect to the each of the first and second electronic control devices, transmitting the data for rewriting the each of the programs to the first electronic control device with a first identifier uniquely assigned to the first electronic control device so as to be different from the common identifier when the batch rewriting of the programs is determined not to be executed with respect to the first electronic control device, and transmitting the data for rewriting the each of the programs to the second electronic control device with a second identifier uniquely assigned to the second electronic control device so as to be different from the common identifier when the batch rewriting of the programs is determined not to be executed with respect to the second electronic control device.

A watercraft system according to another aspect of the present teaching includes a first marine propulsion device, a second marine propulsion device, a communication network, and a computer. The first marine propulsion device includes a first electronic control device. The second marine propulsion device includes a second electronic control device. The communication network connects the first electronic control device and the second electronic control device therethrough. The computer is connected to the communication network and rewrites a program of the first electronic control device and a program of the second electronic control device.

The computer determines whether or not to execute batch rewriting of the programs with respect to each of the first and second electronic control devices. The computer transmits data for rewriting each of the programs to the each of the first and second electronic control devices with a common identifier preliminarily set to each of the first and second electronic control devices through the communication network when the batch rewriting of the programs is determined to be executed with respect to the each of the first and second electronic control devices. The computer transmits the data for rewriting the each of the programs to the first electronic control device with a first identifier uniquely assigned to the first electronic control device so as to be different from the common identifier when the batch rewriting of the programs is determined not to be executed with respect to the first electronic control device. The computer transmits the data for rewriting the each of the programs to the second electronic control device with a second identifier uniquely assigned to the second electronic control device so as to be different from the common identifier when the batch rewriting of the programs is determined not to be executed with respect to the second electronic control device.

According to the present teaching, when the batch rewriting of the programs is determined to be executed with respect to each of the plural electronic control devices, the data for rewriting each of the programs are transmitted to each of the plural electronic control devices with the common identifier through the communication network. This results in reduction in length of time required to rewrite the programs of the plural electronic control devices. Besides, when the batch rewriting of the programs is determined not to be executed with respect to a given one of the plural electronic control devices, the data for rewriting each of the programs are transmitted to the given electronic control device with the unique identifier. Accordingly, each of the programs can be rewritten depending on what a request for rewriting each of the programs is like in each of the plural electronic control devices.

### BRIEF DESCRIPTION OF THE DRAWINGS

FIG. 1 is a schematic diagram showing a watercraft according to a preferred embodiment.
FIG. 2 is a side view of a marine propulsion device.
FIG. 3 is a schematic diagram showing a control system for the watercraft.
FIG. 4 is a flowchart showing a series of processing executed by a computer to rewrite a program of an ECU (Engine Control Unit).
FIG. 5 is a flowchart showing a series of processing executed by the computer to rewrite the program of the ECU.
FIG. 6 is a flowchart showing a series of processing executed by the ECU when the ECU receives a command to update the frequency of rewriting.
FIG. 7 is a flowchart showing a series of processing executed by the ECU.

### DETAILED DESCRIPTION OF EMBODIMENTS

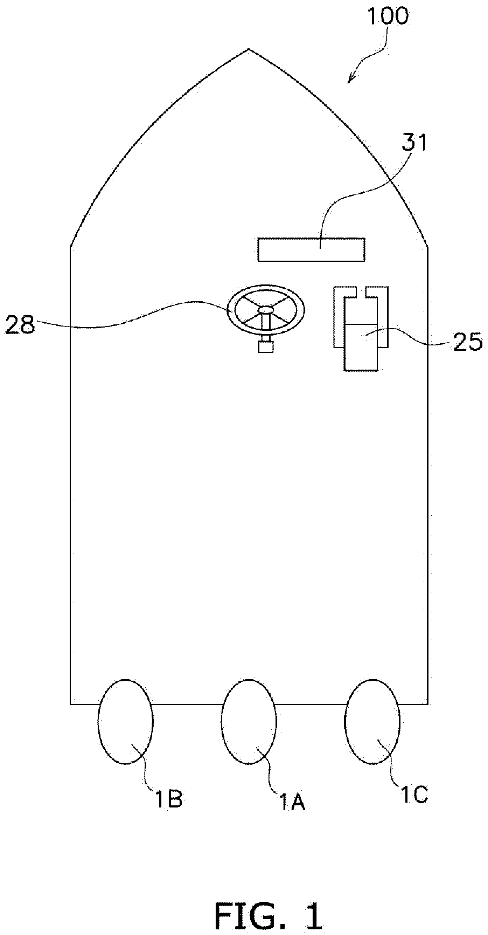

A preferred embodiment will be hereinafter explained with reference to drawings. FIG. 1 is a perspective view of a watercraft 100 according to the preferred embodiment. A plurality of marine propulsion devices 1A to 1C are attached to the stern of the watercraft 100. Each of the marine propulsion devices 1A to 1C generates a thrust for propelling the watercraft 100. In the present preferred embodiment, the marine propulsion devices 1A to 1C are outboard motors. The marine propulsion devices 1A to 1C include a first marine propulsion device 1A, a second marine propulsion device 1B, and a third marine propulsion device 1C.

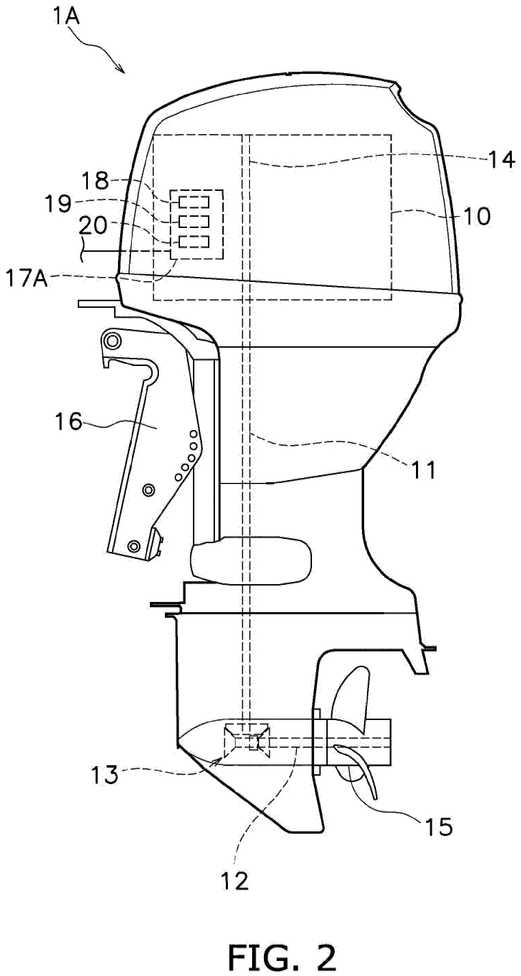

FIG. 2 is a side view of the first marine propulsion device 1A. As shown in FIG. 2, the first marine propulsion device 1A includes an engine 10, a drive shaft 11, a propeller shaft 12, and a shift mechanism 13. The engine 10 generates the thrust for propelling the watercraft 100. The engine 10 includes a crankshaft 14. The crankshaft 14 extends in the vertical direction. The drive shaft 11 is connected to the crankshaft 14. The drive shaft 11 extends in the vertical direction. The drive shaft 11 extends downward from the engine 10.

The propeller shaft 12 extends in the back-and-forth direction of the first marine propulsion device 1A. The propeller shaft 12 is connected to the drive shaft 11 through the shift mechanism 13. A propeller 15 is connected to the propeller shaft 12. The shift mechanism 13 switches the rotational direction of mechanical power to be transmitted from the drive shaft 11 to the propeller shaft 12. The shift mechanism 13 includes, for instance, a plurality of gears and a clutch that changes meshing of the gears. The first marine propulsion device 1A is attached to the watercraft 100 through a bracket 16.

The first marine propulsion device 1A includes a first ECU (Engine Control Unit) 17A. The first ECU 17A is an electronic control device for controlling the engine 10. The first ECU 17A includes a processor 18 such as a CPU (Central Processing Unit), a RAM (Random Access Memory) 19, and a flash ROM (Read Only Memory) 20. The flash ROM 20 stores programs for controlling the engine 10. The first ECU 17A is programmed to electrically control the engine 10.

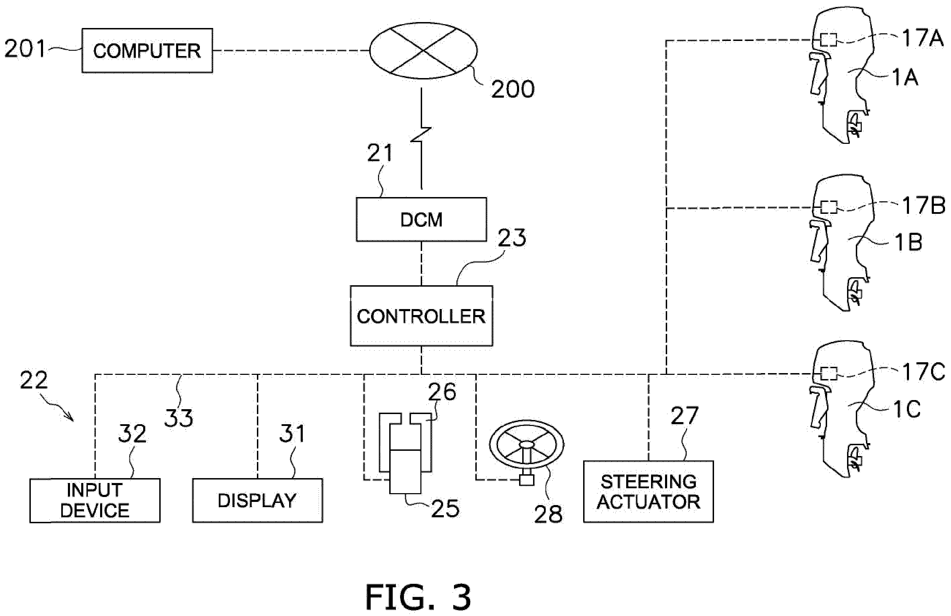

FIG. 3 is a schematic diagram showing a configuration of a watercraft system installed in the watercraft 100. As shown in FIG. 3, the second marine propulsion device 1B includes a second ECU 17B. The third marine propulsion device 1C includes a third ECU 17C. Each of the second and third ECUs 17B and 17C is similar in configuration and function to the first ECU 17A. The other constituent elements in each of the second and third marine propulsion devices 1B and 1C are similar to those in the first marine propulsion device 1A.

As shown in FIG. 3, the watercraft system includes a data communication module (hereinafter referred to as DCM) 21, a device system 22, and a controller 23. The DCM 21 performs wireless communication with an external computer 201. For example, the DCM 21 is capable of performing data transmission with the external computer 201 through a mobile communication network 200. The mobile communication network 200 is, for instance, a network of a 3G, 4G, or 5G mobile communication system.

The device system 22 includes electric devices installed in the watercraft 100. For example, the device system 22 includes the first to third ECUs 17A to 17C described above. The device system 22 includes a throttle-shift operating device 25. The throttle-shift operating device 25 is operable by an operator to regulate the rotational speed of the engine 10 in each of the first to third marine propulsion devices 1A to 1C. Besides, the throttle-shift operating device 25 is operable by the operator to perform switching between a forward moving action and a rearward moving action by each of the first to third marine propulsion devices 1A to 1C.

The throttle-shift operating device 25 includes a throttle lever 26. The throttle lever 26 is operable from a neutral position to a forward moving position and a rearward moving position. The throttle-shift operating device 25 outputs a throttle signal indicating the operating position of the throttle lever 26. Each ECU 17A, 17B, 17C receives the throttle signal from the throttle-shift operating device 25. Each ECU 17A, 17B, 17C controls the shift mechanism 13 relevant thereto in accordance with the operating position of the throttle lever 26. Accordingly, the rotational direction of the propeller shaft 12 relevant thereto is switched between a forward moving direction and a rearward moving direction. Besides, each ECUs 17A, 17B, 17C controls the rotational speed of the engine 10 relevant thereto depending on the operating position of the throttle lever 26.

The device system 22 includes a steering actuator 27 and a steering operating device 28. The steering actuator 27 tums each marine propulsion device 1A, 1B, 1C right and left so as to change the rudder angle of each marine propulsion device 1A, 1B, 1C. The steering actuator 27 is, for instance, an electric motor. Alternatively, the steering actuator 27 may include an electric pump and a hydraulic cylinder.

The steering operating device 28 is operable by the operator to adjust the rudder angle of each marine propulsion device 1A, 1B, 1C. The steering operating device 28 is, for instance, a steering wheel. Alternatively, the steering operating device 28 may be another type of operating device such as a joystick. The steering operating device 28 is operable right and left from a neutral position. The steering operating device 28 outputs a steering signal indicating the operating position thereof. The steering actuator 27 is controlled depending on the operating position of the steering operating device 28, whereby the rudder angle of each marine propulsion device 1A, 1B, 1C is controlled.

The device system 22 includes a display 31 and an input device 32. The display 31 displays information regarding each marine propulsion device 1A, 1B, 1C. The display 31 displays an image in accordance with an image signal inputted thereto. The input device 32 receives an operational input by a user. The input device 32 outputs an input signal indicating the operational input by the user. The input device 32 is, for instance, a touchscreen. However, the input device 32 may include at least one hardware key. The device system 22 includes a CAN (Controller Area Network) 33. The CAN 33 is a communication network that the electric devices, included in the device system 22, are connected therethrough to each other.

The controller 23 includes a processor such as a CPU and memories such as a RAM and a ROM. The controller 23 controls the device system 22. For example, the controller 23 controls the device system 22 in accordance with the input signal transmitted thereto from the input device 32. The controller 23 outputs the image signal to the display 31 so as to cause the display 31 to display a desired image. The device system 22 is connected to the DCM 21 through the controller 23.

A computer 201 is connected to the CAN 33 through the DCM 21. The computer 201 rewrites a program of each ECU 17A, 17B, 17C by utilizing a protocol for rewriting the program such as UDS (Unified Diagnostic Services). A series of processing for rewriting the program of each ECU 17A, 17B, 17C will be hereinafter explained.

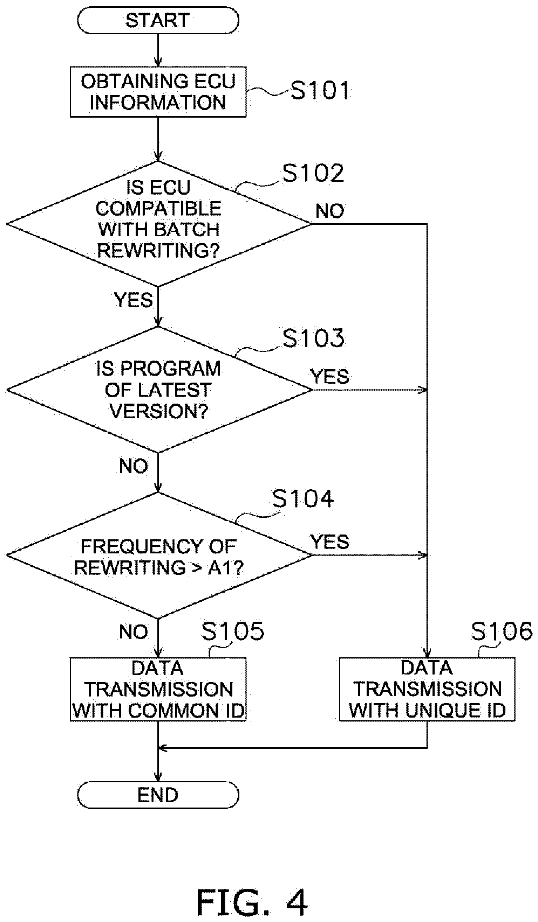

FIG. 4 is a flowchart showing a series of processing executed by the computer 201 to rewrite the program of each ECU 17A, 17B, 17C. As shown in FIG. 4, in step S101, the computer 201 obtains ECU information from each ECU 17A, 17B, 17C. The ECU information includes the protocol version, the frequency of rewriting the program, the serial number, and the version of the program of each ECU 17A, 17B, 17C. It should be noted that the computer 201 herein obtains the ECU information by another communication protocol different from the rewriting protocol in the CAN 33 described above. In another communication protocol herein described, IDs are set for a plurality of ECUs so as to distinguish the ECUs from one another even when the ECUs are of an identical type. For instance, SAE J1939 may be employed as another communication protocol herein described. This is because, when receiving multiple packet responses from the ECUs 17A to 17C in communication under the rewriting protocol, the computer 201 cannot correctly distinguish the responses from the ECUs 17A to 17C from one another.

In step S102, the computer 201 determines whether or not each ECU 17A, 17B, 17C is compatible with batch rewriting. The computer 201 determines whether or not each ECU 17A, 17B, 17C is compatible with the batch rewriting based on the version of the protocol of each ECU 17A, 17B, 17C.

In step S103, the computer 201 determines whether or not the program in each ECU 17A, 17B, 17C is of the latest version. In step S104, the computer 201 determines whether or not the frequency of rewriting the program is greater than a set value A1. In step S105, the computer 201 transmits data for rewriting the program of each ECU 17A, 17B, 17C to each ECU 17A, 17B, 17C with a common identifier for the batch rewriting when each ECU 17A, 17B, 17C satisfies the following conditions: Each ECU 17A, 17B, 17C is compatible with the batch rewriting, the program is not of the latest version, and the frequency of rewriting the program is not greater than the set value A1. In other words, the computer 201 determines to execute the batch rewriting with respect to each ECU 17A, 17B, 17C with the common identifier when each ECU 17A, 17B, 17C satisfies the following conditions: Each ECU 17A, 17B, 17C is compatible with the batch rewriting, the program is not of the latest version, and the frequency of rewriting the program is not greater than the set value A1. The common identifier has been preliminarily set to each ECU 17A, 17B, 17C having a protocol version compatible with the batch rewriting.

When each ECU 17A, 17B, 17C is incompatible with the batch rewriting in step S102, the processing proceeds to step S106. In step S106, the computer 201 transmits the data for rewriting the program to each ECU 17A, 17B, 17C with a unique identifier for discrete rewriting. The unique identifier has been preliminarily assigned and set to each ECU 17A, 17B, 17C having a protocol version incompatible with the batch rewriting.

For example, the computer 201 simultaneously transmits the data for rewriting the program to the first and second ECUs 17A and 17B with an identifier common to the first and second ECUs 17A and 17B when determining that each of the first and second ECUs 17A and 17B satisfies the following conditions; Each ECU 17A, 17B is compatible with the batch rewriting, the program is not of the latest version, and the frequency of rewriting the program is not greater than the set value A1. On the other hand, when determining that the third ECU 17C is incompatible with the batch rewriting, the computer 201 transmits the data for rewriting the program to the third ECU 17C with an identifier uniquely assigned to the third ECU 17C. In other words, the computer 201 separately executes data transmission to the first and second ECUs 17A and 17B with the common identifier and data transmission to the third ECU 17C with the unique identifier.

It should be noted that even if the third ECU 17C is compatible with the batch rewriting, when the program of the third ECU 17C is of the latest version or when the frequency of rewriting the program of the third ECU 17C is greater than the set value A1, the computer 201 executes the batch rewriting of the programs with respect to only the first and second ECUs 17A and 17B with the common identifier. In other words, the computer 201 determines not to execute the batch rewriting with respect to each ECU 17A, 17B, 17C when each ECU 17A, 17B, 17C satisfies any of the following conditions: Each ECU 17A, 17B, 17C is incompatible with the batch rewriting, the program is of the latest version, and the frequency of rewriting the program is greater than the set value A1.

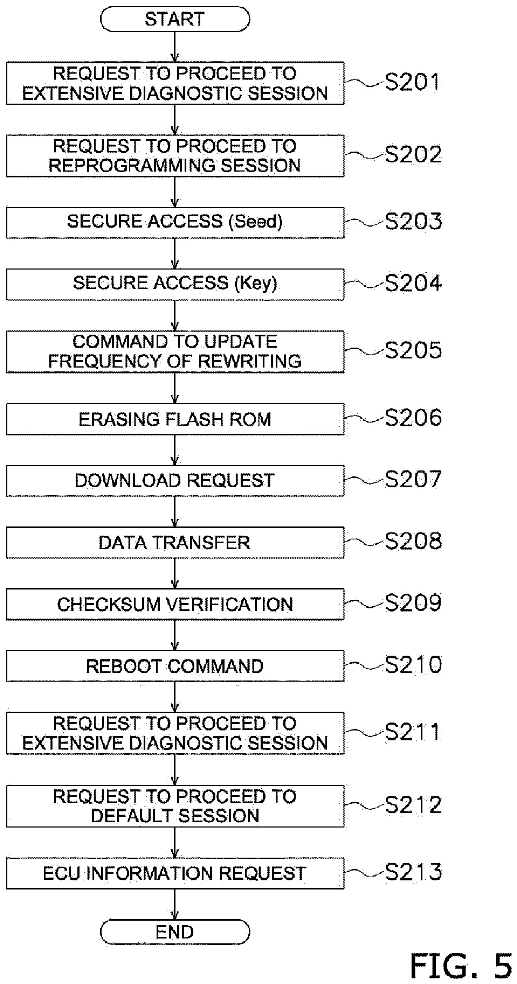

When determining to execute the batch rewriting with respect to given ECUs, the computer 201 executes a series of processing shown in FIG. 5 to transmit data to the given ECUs with the common identifier. It is hereinafter assumed that each of the first and second ECUs 17A and 17B satisfies the following conditions: Each ECU 17A, 17B is compatible with the batch rewriting, the program is not of the latest version, and the frequency of rewriting the program is not greater than the set value A1. On the other hand, it is assumed that the third ECU 17C satisfies any of the following conditions: The third ECU 17C is incompatible with the batch rewriting, the program is of the latest version, and the frequency of rewriting the program is greater than the set value A1.

As shown in FIG. 5, in step S201, the computer 201 transmits a request to proceed to an extensive diagnostic session to each ECU 17A, 17B. In step S202, the computer 201 transmits a request to proceed to a reprogramming session to each ECU 17A, 17B.

In step S203, the computer 201 transmits "Seed" for secure access to each ECU 17A, 17B. In step S204, the computer 201 transmits "Key" for secure access to each ECU 17A, 17B. It should be noted that the Key is processed as an error in a given ECU other than each ECU 17A, 17B associated with the Key; hence, the number of Keys transmitted from the computer 201 is equal to the number of the ECUs 17A and 17B associated with the Keys. Besides, the ECUs 17A and 17B allow errors to occur at a frequency of "the number of ECUs ? 1".

In step S205, the computer 201 transmits a command to update the frequency of rewriting. The computer 201 transmits, not a specific value of frequency, but a command to increase by one the frequency of rewriting, to each ECU 17A, 17B.

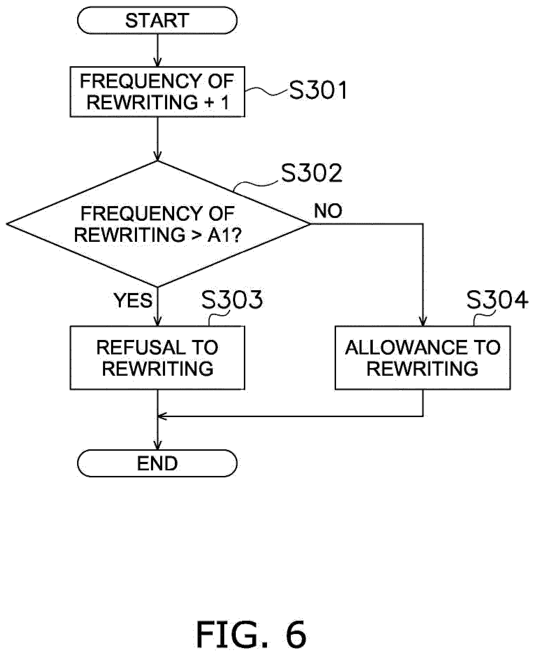

FIG. 6 is a flowchart showing a series of processing executed by each ECU 17A, 17B when each ECU 17A, 17B receives the command to update the frequency of rewriting. For example, suppose the first ECU 17A receives the command to update the frequency of rewriting. As shown in FIG. 6, the first ECU 17A increases by one the frequency of rewriting executed therein in step S301. When the upper limit is set for the frequency of rewriting in the ECU 17A, the first ECU 17A determines whether or not the frequency of rewriting is greater than a set value A1 in step S302.

When the first ECU 17A determines that the frequency of rewriting is greater than the set value A1 in step S302, the processing proceeds to step S303. In step S303, the first ECU 17A refuses to rewrite the program. In this case, the first ECU 17A transmits a negative response to the computer 201. When receiving the negative response from the first ECU 17A, the computer 201 determines that the program is not rewritable in the first ECU 17A.

When the first ECU 17A determines that the frequency of rewriting is not greater than the set value A1 in step S302, the processing proceeds to step S304. In step S304, the first ECU 17A accepts rewriting of the program. In this case, the first ECU 17A transmits a positive response to the computer 201. It should be noted that, even when the upper limit is not set for the frequency of rewriting in the first ECU 17A, the first ECU 17A transmits the positive response to the computer 201. When receiving the positive response from the first ECU 17A, the computer 201 determines that the program is rewritable in the first ECU 17A. Likewise, the second ECU 17B executes the series of processing described above, when receiving the command to update the frequency of rewriting.

In step S206, the computer 201 transmits a command to erase the flash ROM to each ECU 17A, 17B. It should be noted that a given ECU, in which the program is not rewritable, transmits a negative response with respect to the series of processing in step S206 and thereafter, whereas only another ECU, in which the program is rewritable, continues executing the series of processing in step S206 and thereafter.

In step S207, the computer 201 transmits a download request to each ECU 17A, 17B. When there is a difference in response to the download request between the ECUs 17A and 17B (e.g., a difference in volume of acceptable data or a difference in request for intervals of communication time), the computer 201 executes data transfer in accordance with the loosest one of the conditions obtained from the responses. Besides, each ECU 17A, 17B transmits a response based on the volume of data transmission declared by the computer 201. In short, the computer 201 does not execute processing depending on a value requested by each ECU 17A, 17B.

In step S208, the computer 201 transmits updated program data to each ECU 17A, 17B. Each ECU 17A, 17B rewrites the program based on the received program data. For example, when accepting to rewrite the program, the first ECU 17A rewrites the program based on the program data received from the computer 201. When refusing to rewrite the program, the first ECU 17A does not rewrite the program.

When transmission of the program data is completed, the computer 201 transmits a checksum verification to each ECU 17A, 17B in step S209. In step S210, the computer 201 transmits a reboot command to each ECU 17A, 17B. In step S211, the computer 201 transmits a request to proceed to an extensive diagnostic session to each ECU 17A, 17B. In step S212, the computer 201 transmits a request to proceed to a default session to each ECU 17A, 17B.

In step S213, the computer 201 transmits an ECU information request to each ECU 17A, 17B. In similar manner to step S101 described above, the computer 201 herein obtains the ECU information with another communication protocol different from the rewriting protocol in the CAN 33.

It should be noted that each ECU 17A, 17B transmits a response with respect to each processing described above; then, the computer 201 executes the following processing after receiving the response from each ECU 17A, 17B. When any kind of error occurs in either the ECU 17A or the ECU 17B in the series of processing executed before the processing step of erasing the flash ROM, the computer 201 determines that the program is not rewritable in the ECU in which any kind of error occurs but continues executing the batch rewriting. On the other hand, even when any kind of error occurs in either the ECU 17A or the ECU 17B in the series of processing at and after the processing step of erasing the flash ROM, the computer 201 executes the batch rewriting till the end. In other words, when a given ECU has a chance of success of rewriting, the computer 201 executes the series of processing with respect to the given ECU till the end of rewriting. Accordingly, occurrence of damage or breakage of software can be inhibited in each ECU 17A, 17B.

The computer 201 transmits data to the third ECU 17C incompatible with the batch rewriting with an identifier uniquely assigned to the third ECU 17C in a series of processing similar to that described above.

As shown in steps S102 to S104 in FIG. 4, the computer 201 does not execute the batch rewriting of the programs for a given one of the first to third ECUs 17A to 17C with the common identifier when the given ECU satisfies any of the following conditions: The given ECU is incompatible with the batch rewriting, the program is of the latest version, and the frequency of rewriting the program is greater than the set value A1. In this case, the computer 201 executes the discrete rewriting of the program with respect to the given ECU by transmitting date to the given ECU with the unique identifier.

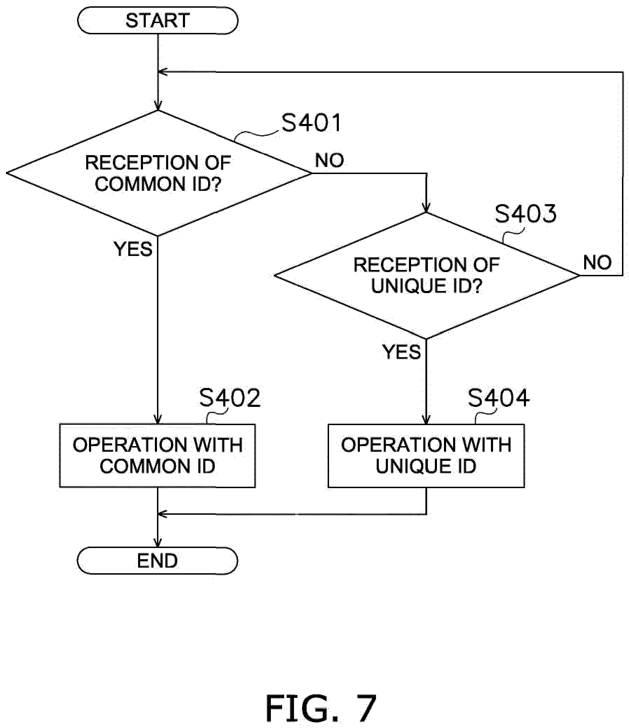

FIG. 7 is a flowchart showing a series of processing executed by each ECU 17A, 17B, 17C. As shown in FIG. 7, in step S401, each ECU 17A, 17B, 17C determines whether or not having received the common identifier from the computer 201. It should be noted that each ECU 17A, 17B, 17C stores an identifier common to the ECUs 17A to 17C and an identifier uniquely assigned to each ECU 17A, 17B, 17C.

For example, the first ECU 17A stores the common identifier and a first identifier as a unique identifier. The second ECU 17B stores the common identifier and a second identifier as a unique identifier. The third ECU 17C stores the common identifier and a third identifier as a unique identifier. The first to third identifiers are identifiers uniquely assigned to the first to third ECUs 17A to 17C, respectively. The first to third identifiers are different not only from each other but also from the common identifier.

When receiving the common identifier, each ECU 17A, 17B, 17C operates with the common identifier in step S402. In other words, each ECU 17A, 17B, 17C receives the data described above from the computer 201 with the common identifier and transmits a response to the computer 201. Accordingly, each ECU 17A, 17B, 17C updates the program thereof under the batch rewriting.

In step S403, each ECU 17A, 17B, 17C determines whether or not having received the unique identifier from the computer 201. When receiving the unique identifier from the computer 201, each ECU 17A, 17B, 17C operates with the unique identifier in step S404. For example, when having received the first identifier, the first ECU 17A receives the data described above from the computer 201 with the first identifier and transmits a response to the computer 201. When having received the second identifier, the second ECU 17B receives the data described above from the computer 201 with the second identifier and transmits a response to the computer 201. When having received the third identifier, the third ECU 17C receives the data described above from the computer 201 with the third identifier and transmits a response to the computer 201. Accordingly, each ECU 17A, 17B, 17C updates the program thereof under the discrete rewriting.

In the watercraft system according to the present preferred embodiment explained above, when the batch rewriting of the programs is determined to be executed with respect to the plural ECUs 17A to 17C, the data for rewriting the program are transmitted to each of the plural ECUs 17A to 17C with the common identifier through the CAN 33. Because of this, the programs are simultaneously rewritten with respect to the plural ECUs 17A to 17C. This results in reduction in length of time required to rewrite the programs of the plural ECUs 17A to 17C. Besides, when the batch rewriting is determined not to be executed with respect to a given one of the plural ECUs 17A to 17C, the data for rewriting the program are transmitted to the given ECU with the unique identifier. Accordingly, the program can be rewritten depending on what a request for rewriting the program is like in each of the plural ECUs 17A to 17C.

Each marine propulsion device 1A, 1B, 1C is not limited to the outboard motor, and alternatively, may be another type of propulsion device such as an inboard engine outboard drive or a jet propulsion device. The structure of each marine propulsion device 1A, 1B, 1C is not limited to that in the preferred embodiment described above and may be changed. For example, each marine propulsion device 1A, 1B, 1C may include an electric motor instead of the engine.

The number of marine propulsion devices is not limited to three. The number of marine propulsion devices may be two or may be more than three. The electronic control device is not limited to the ECU described above and may be changed. For example, when each marine propulsion device includes an electric motor as a drive source, the electronic control device may be a motor controller for controlling the electric motor.

The condition for rewriting the program is not limited to that the frequency of rewriting the program has not reached the set value. Another condition may be set as an additional condition for rewriting the program. For example, a condition that at least one of the marine propulsion devices is not in operation or a condition that a voltage applied to each ECU is greater than or equal to a predetermined value may be set as an additional condition for rewriting the program.

In the preferred embodiment described above, the computer 201 is connected to the CAN 33 through the mobile communication network 200. However, the computer 201 may be connected to the CAN 33 through a wired communication or a short-range wireless communication including a WLAN (wireless local area network), Bluetooth (registered trademark), or so forth.

Each of the ECUs may execute a suitable one selected from different types of processing depending on the following types of operations: an operation with the common identifier and an operation with the unique identifier. The computer 201 may execute a suitable one selected from different types of processing depending on the following types of data transmission: data transmission with the common identifier and data transmission with the unique identifier.

### REFERENCE SIGNS LIST

- 1A: First marine propulsion device
- 1B: Second marine propulsion device
- 1C: Third marine propulsion device
- 17A: First ECU
- 17B: Second ECU
- 17C: Third ECU
- 33: CAN
- 201: Computer

## Claims

1. A method of rewriting a program of at least a first electronic control device (17A) and a program of at least a second electronic control device (17B) in a watercraft system configured to be installed in a watercraft (100), the watercraft system including at least a first marine propulsion device (1A), at least a second marine propulsion device (1B), and a communication network (33), the first marine propulsion device (1A) including the first electronic control device (17A), the second marine propulsion device (1B) including the second electronic control device (17B), the communication network (33) connecting the first electronic control device (17A) and the second electronic control device (17B) therethrough, the method comprising:
determining, by an external computer (201), whether or not to execute batch rewriting of the programs with respect to each of the first and second electronic control devices (17A, 17B), wherein the external computer (201) obtains electronic control device information from each of the first and second electronic control devices (17A, 17B) and determines whether or not each of the first and second electronic control devices (17A, 17B) is compatible with batch rewriting;
transmitting data for rewriting each of the programs to the each of the first and second electronic control devices (17A, 17B) with a common identifier preliminarily set to each of the first and second electronic control devices (17A, 17B) through the communication network (33) when the batch rewriting of the programs is determined to be executed with respect to the each of the first and second electronic control devices (17A, 17B), wherein the external computer (201) transmits data for rewriting the program of each of the first and second electronic control devices (17A, 17B) to each of the first and second electronic control devices (17A, 17B) with the common identifier for the batch rewriting when each of the first and second electronic control devices (17A, 17B) satisfies the following conditions: each of the first and second electronic control devices (17A, 17B) is compatible with the batch rewriting, the program is not of the latest version, and the frequency of rewriting the program is not greater than set value (A1) set by the external computer (201), the external computer (201) transmits a command to update the frequency of rewriting to each of the first and second electronic control devices (17A, 17B) being compatible with the batch rewriting, wherein when the electronic control device (17A, 17B) determines that the frequency of rewriting is not greater than the set value (A1), the electronic control device (17A, 17B) accepts rewriting of the program and transmits a positive response to the external computer (201) and the external computer (201) transmits a download request to each of the first and second electronic control devices (17A, 17B) that transmits the positive response to the external computer (201) and transmits updated program data to each of the first and second electronic control devices (17A, 17B), and each of the first and second electronic control devices (17A, 17B) rewrites the program based on the received program data;
transmitting the data for rewriting the each of the programs to the first electronic control device (17A) with a first identifier uniquely assigned to the first electronic control device (17A) so as to be different from the common identifier when the batch rewriting of the programs is determined not to be executed with respect to the first electronic control device (17A); and
transmitting the data for rewriting the each of the programs to the second electronic control device (17B) with a second identifier uniquely assigned to the second electronic control device (17B) so as to be different from the common identifier when the batch rewriting of the programs is determined not to be executed with respect to the second electronic control device (17B).

2. The method according to claim 1, further comprising:
obtaining a version of a protocol for rewriting the each of the programs from the each of the first and second electronic control devices (17A, 17B); and
determining whether or not to execute the batch rewriting of the programs with respect to the each of the first and second electronic control devices (17A, 17B) based on the version of the protocol.

3. The method according to claim 1 or 2, wherein the watercraft system further includes a third marine propulsion device (1C), the third marine propulsion device (1C) including a third electronic control device (17C), the communication network (33) connecting the first electronic control device (17A), the second electronic control device (17B) and third electronic control device (17C) therethrough, the method comprising:
determining, by the external computer (201), whether or not to execute batch rewriting of the programs with respect to each of the first, second and third electronic control devices (17A, 17B, 17C), wherein the external computer (201) obtains electronic control device information from each of the first, second and third electronic control devices (17A, 17B, 17C) and determines whether or not at least two of the first, second and third electronic control devices (17A, 17B, 17C) is compatible with batch rewriting;
transmitting data for rewriting each of the programs to at least two of the first, second and third electronic control devices (17A, 17B, 17C) with a common identifier preliminarily set to the at least two of the first, second and third electronic control devices (17A, 17B, 17C) through the communication network (33) when the batch rewriting of the programs is determined to be executed with respect to said at least two of the first, second and third electronic control devices (17A, 17B, 17C), wherein the external computer (201) transmits data for rewriting the program of the at least two of the first, second and third electronic control devices (17A, 17B, 17C) to the at least two of the first, second and third electronic control devices (17A, 17B, 17C) with the common identifier for the batch rewriting when the at least two of the first, second and third electronic control devices (17A, 17B, 17C) satisfies the following conditions: at least two of the first, second and third electronic control devices (17A, 17B, 17C) is compatible with the batch rewriting, the program is not of the latest version, and the frequency of rewriting the program is not greater than set value (A1) set by the external computer (201), the external computer (201) transmits a command to update the frequency of rewriting to the at least two of the first, second and third electronic control devices (17A, 17B, 17C) being compatible with the batch rewriting, wherein when the electronic control device (17A, 17B, 17C) determines that the frequency of rewriting is not greater than the set value (A1), the electronic control device (17A, 17B, 17C) accepts rewriting of the program and transmits a positive response to the external computer (201) and the external computer (201) transmits a download request to the at least two of the first, second and third electronic control devices (17A, 17B, 17C) that transmits the positive response to the external computer (201) and transmits updated program data to each of the first, second and third electronic control devices (17A, 17B 17C), the at least two of the first, second and third electronic control devices (17A, 17B, 17C) rewrites the program based on the received program data;
transmitting the data for rewriting the each of the programs to the first electronic control device (17A) with a first identifier uniquely assigned to the first electronic control device (17A) so as to be different from the common identifier when the batch rewriting of the programs is determined not to be executed with respect to the first electronic control device (17A); and
transmitting the data for rewriting the each of the programs to the second electronic control device (17B) with a second identifier uniquely assigned to the second electronic control device (17B) so as to be different from the common identifier when the batch rewriting of the programs is determined not to be executed with respect to the second electronic control device (17B).
transmitting the data for rewriting the each of the programs to the third electronic control device (17C) with a third identifier uniquely assigned to the third electronic control device (17C) so as to be different from the common identifier when the batch rewriting of the programs is determined not to be executed with respect to the third electronic control device (17C).

4. A watercraft system configured to be installed in a watercraft (100), the watercraft system comprising:
at least a first marine propulsion device (1A) including a first electronic control device (17A);
at least a second marine propulsion device (1B) including a second electronic control device (17B);
a communication network (33) connecting the first electronic control device (17A) and the second electronic control device (17B) therethrough; and
an external computer (201) attached to the watercraft system for rewriting a program of the first electronic control device (17A) and a program of the second electronic control device (17B), the computer (201) being connected to the communication network (33), wherein
the external computer (201) is configured to
determine whether or not to execute batch rewriting of the programs with respect to each of the first and second electronic control devices (17A, 17B),
obtain electronic control device information from each of the first and second electronic control devices (17A, 17B),
determine whether or not each of the first and second electronic control devices (17A, 17B) is compatible with batch rewriting;
transmit data for rewriting each of the programs to the each of the first and second electronic control devices (17A, 17B) with a common identifier preliminarily set to each of the first and second electronic control devices (17A, 17B) through the communication network (33) when the batch rewriting of the programs is determined to be executed with respect to the each of the first and second electronic control devices (17A, 17B),
transmit data for rewriting the program of each of the first and second electronic control devices (17A, 17B) to each of the first and second electronic control devices (17A, 17B) with the common identifier for the batch rewriting when each of the first and second electronic control devices (17A, 17B) satisfies the following conditions: each of the first and second electronic control devices (17A, 17B) is compatible with the batch rewriting, the program is not of the latest version, and the frequency of rewriting the program is not greater than set value (A1) set by the external computer (201),
transmit a command to update the frequency of rewriting to each of the first and second electronic control devices (17A, 17B) being compatible with the batch rewriting, wherein when the electronic control device (17A, 17B) determines that the frequency of rewriting is not greater than the set value (A1), the electronic control device (17A, 17B) accepts rewriting of the program and transmits a positive response to the external computer (201) and the external computer (201) transmits a download request to each of the first and second electronic control devices (17A, 17B) that transmits the positive response to the external computer (201) and transmits updated program data to each of the first and second electronic control devices (17A, 17B), and each of the first and second electronic control devices (17A, 17B) rewrites the program based on the received program data;
the external computer (201) is further configured to transmit the data for rewriting the each of the programs to the first electronic control device (17A) with a first identifier uniquely assigned to the first electronic control device (17A) so as to be different from the common identifier when the batch rewriting of the programs is determined not to be executed with respect to the first electronic control device (17A), and
transmit the data for rewriting the each of the programs to the second electronic control device (17B) with a second identifier uniquely assigned to the second electronic control device (17B) so as to be different from the common identifier when the batch rewriting of the programs is determined not to be executed with respect to the second electronic control device (17B).

5. The watercraft system according to claim 4, wherein the external computer (201) is configured to
obtain a version of a protocol for rewriting the each of the programs from the each of the first and second electronic control devices (17A, 17B), and
determine whether or not to execute the batch rewriting of the programs with respect to the each of the first and second electronic control devices (17A, 17B) based on the version of the protocol.

6. The watercraft system to claim 4 or 5, wherein the watercraft system further includes a third first marine propulsion device (1C), the third marine propulsion device (1C) including a third electronic control device (17C), the communication network (33) connecting the first electronic control device (17A), the second electronic control device (17B) and third electronic control device (17C) therethrough, wherein the computer (201) is configured to
determine whether or not to execute batch rewriting of the programs with respect to each of the first, second and third electronic control devices (17A, 17B, 17C),
obtain electronic control device information from each of the first, second and third electronic control devices (17A, 17B, 17C),
determine whether or not at least two of the first, second and third electronic control devices (17A, 17B, 17C) is compatible with batch rewriting;
transmit data for rewriting each of the programs to at least two of the first, second and third electronic control devices (17A, 17B, 17C) with a common identifier preliminarily set to the at least two of the first, second and third electronic control devices (17A, 17B, 17C) through the communication network (33) when the batch rewriting of the programs is determined to be executed with respect to said at least two of the first, second and third electronic control devices (17A, 17B, 17C),
transmit data for rewriting the program of the at least two of the first, second and third electronic control devices (17A, 17B, 17C) to the at least two of the first, second and third electronic control devices (17A, 17B, 17C) with the common identifier for the batch rewriting when the at least two of the first, second and third electronic control devices (17A, 17B, 17C) satisfies the following conditions: at least two of the first, second and third electronic control devices (17A, 17B, 17C) is compatible with the batch rewriting, the program is not of the latest version, and the frequency of rewriting the program is not greater than set value (A1) set by the external computer (201),
transmit a command to update the frequency of rewriting to the at least two of the first, second and third electronic control devices (17A, 17B, 17C) being compatible with the batch rewriting, wherein when the electronic control device (17A, 17B, 17C) determines that the frequency of rewriting is not greater than the set value (A1), the electronic control device (17A, 17B, 17C) accepts rewriting of the program and transmits a positive response to the external computer (201) and the external computer (201) transmits a download request to the at least two of the first, second and third electronic control devices (17A, 17B, 17C) that transmits the positive response to the external computer (201) and transmits updated program data to each of the first, second and third electronic control devices (17A, 17B 17C), the at least two of the first, second and third electronic control devices (17A, 17B, 17C) rewrites the program based on the received program data;
transmit the data for rewriting the each of the programs to the first electronic control device (17A) with a first identifier uniquely assigned to the first electronic control device (17A) so as to be different from the common identifier when the batch rewriting of the programs is determined not to be executed with respect to the first electronic control device (17A); and
transmit the data for rewriting the each of the programs to the second electronic control device (17B) with a second identifier uniquely assigned to the second electronic control device (17B) so as to be different from the common identifier when the batch rewriting of the programs is determined not to be executed with respect to the second electronic control device (17B).
transmit the data for rewriting the each of the programs to the third electronic control device (17C) with a third identifier uniquely assigned to the third electronic control device (17C) so as to be different from the common identifier when the batch rewriting of the programs is determined not to be executed with respect to the third electronic control device (17C).

## Patentansprüche

1. Ein Verfahren zum Überschreiben eines Programms von zumindest einer ersten elektronischen Steuervorrichtung (17A) und eines Programms von zumindest einer zweiten elektronischen Steuervorrichtung (17B) in einem Wasserfahrzeugsystem, das zur Installation in einem Wasserfahrzeug (100) konfiguriert ist, wobei das Wasserfahrzeugsystem zumindest eine erste Wasserfahrzeugvortriebsvorrichtung (1A), zumindest eine zweite Wasserfahrzeugvortriebsvorrichtung (1B), und ein Kommunikationsnetzwerk (33) umfasst, wobei die erste Wasserfahrzeugvortriebsvorrichtung (1A) die erste elektronische Steuervorrichtung (17A) enthält, die zweite Wasserfahrzeugvortriebsvorrichtung (1B) die zweite elektronische Steuervorrichtung (17B) enthält und das Kommunikationsnetzwerk (33) die erste elektronische Steuervorrichtung (17A) und die zweite elektronische Steuervorrichtung (17B) miteinander verbindet, wobei das Verfahren umfasst:
Bestimmen, durch einen externen Computer (201), ob ein Batch-Überschreiben der Programme in Bezug auf jede der ersten und zweiten elektronischen Steuervorrichtungen (17A, 17B) ausgeführt werden soll, wobei der externe Computer (201) Informationen über die elektronischen Steuervorrichtungen von jeder der ersten und zweiten elektronischen Steuervorrichtungen (17A, 17B) abruft, und bestimmt, ob jede, der ersten und die zweiten elektronischen Steuervorrichtungen (17A, 17B) mit dem Batch-Überschreiben kompatibel sind;
Übertragen von Daten zum Überschreiben jedes der Programme an jede der ersten und zweiten elektronischen Steuervorrichtungen (17A, 17B) mit einer gemeinsamen Kennung, die vorab für jede der ersten und zweiten elektronischen Steuervorrichtungen (17A, 17B) gesetzt wurde, über das Kommunikationsnetzwerk (33), wenn festgelegt wurde, dass das Batch-Überschreiben der Programme in Bezug auf jedes der ersten und zweiten elektronischen Steuergeräte (17A, 17B) festgelegt wurde, wobei der externe Computer (201) Daten zum Überschreiben des Programms jedes der ersten und zweiten elektronischen Steuerungsvorrichtungen (17A, 17B) an jede der ersten und zweiten elektronischen Steuerungsvorrichtungen (17A, 17B) mit dem gemeinsamen Identifikator für das Batch-Überschreiben überträgt, wenn jede der ersten und zweiten elektronischen Steuerungsvorrichtungen (17A, 17B) die folgenden Bedingungen erfüllt: jede der ersten und zweiten elektronischen Steuervorrichtungen (17A, 17B) ist mit dem Batch-Überschreiben kompatibel, das Programm ist nicht die neueste Version und die Häufigkeit des Überschreibens des Programms ist nicht größer als ein vom externen Computer (201) gesetzte Wert (A1),
der externe Computer (201) einen Befehl zum Aktualisieren der Häufigkeit des Überschreibens an jedes der ersten und zweiten elektronischen Steuervorrichtungen (17A, 17B) sendet, die mit dem Batch-Überschreiben kompatibel sind, wobei, wenn die elektronische Steuervorrichtung (17A, 17B) feststellt, dass die Häufigkeit des Überschreibens nicht größer als der gesetzte Wert (A1) ist, akzeptiert die elektronische Steuervorrichtung (17A, 17B) das Überschreiben des Programms und sendet eine positive Antwort an den externen Computer (201), und der externe Computer (201) sendet eine Download-Anforderung an jede der ersten und zweiten elektronischen Steuervorrichtungen (17A, 17B), die die positive Antwort an den externen Computer (201) übermitteln, und übermittelt aktualisierte Programmdaten an jede der ersten und zweiten elektronischen Steuervorrichtungen (17A, 17B), und jede der ersten und zweiten elektronischen Steuervorrichtungen (17A, 17B) schreibt das Programm auf der Grundlage der empfangenen Programmdaten um;
Übertragen der Daten zum Überschreiben jedes der Programme an die erste elektronische Steuervorrichtung (17A) mit einer ersten Kennung, die der ersten elektronischen Steuervorrichtung (17A) eindeutig zugewiesen ist, so dass sie sich von der gemeinsamen Kennung unterscheidet, wenn festgestellt wird, dass das Batch-Überschreiben der Programme in Bezug auf die erste elektronische Steuervorrichtung (17A) nicht ausgeführt wird; und
Übertragen der Daten zum Überschreiben jedes der Programme an die zweite elektronische Steuervorrichtung (17B) mit einer zweiten Kennung, die der zweiten elektronischen Steuervorrichtung (17B) eindeutig zugewiesen ist, so dass sie sich von der gemeinsamen Kennung unterscheidet, wenn festgestellt wird, dass das Batch-Überschreiben der Programme in Bezug auf die zweite elektronische Steuervorrichtung (17B) nicht ausgeführt wird.

2. Das Verfahren gemäß Anspruch 1, das ferner umfasst:
Erhalten einer Version eines Protokolls zum Überschreiben jedes der Programme von jeder der ersten und zweiten elektronischen Steuervorrichtungen (17A, 17B); und
Bestimmen, ob das Batch-Überschreiben der Programme in Bezug auf die erste und die zweite elektronische Steuervorrichtung (17A, 17B) auf der Grundlage der Version des Protokolls ausgeführt werden soll oder nicht.

3. Das Verfahren gemäß Anspruch 1 oder 2, wobei das Wasserfahrzeugsystem ferner eine dritte Wasserfahrzeugvortriebsvorrichtung (1C) enthält, die dritte Wasserfahrzeugvortriebsvorrichtung (1C) enthält eine dritte elektronische Steuervorrichtung (17C), das Kommunikationsnetzwerk (33) verbindet die erste elektronische Steuervorrichtung (17A), die zweite elektronische Steuervorrichtung (17B) und die dritte elektronische Steuervorrichtung (17C), das Verfahren umfasst:
Bestimmen, durch den externen Computer (201), ob ein Batch-Überschreiben der Programme in Bezug auf jede der ersten, zweiten und dritten elektronischen Steuervorrichtungen (17A, 17B, 17C) durchgeführt werden soll, wobei der externe Computer (201) Informationen über die elektronischen Steuervorrichtungen von jeder der ersten, zweiten und dritten elektronischen Steuervorrichtungen (17A, 17B, 17C) abfragt und bestimmt, ob zumindest zwei der ersten, zweiten und dritten elektronischen Steuervorrichtungen (17A, 17B, 17C) mit dem Batch-Überschreiben kompatibel sind;
Übertragen von Daten zum Überschreiben jedes der Programme an zumindest zwei der ersten, zweiten und dritten elektronischen Steuervorrichtungen (17A, 17B, 17C) mit einer gemeinsamen Kennung, die vorher für die zumindest zwei der ersten, zweiten und dritten elektronischen Steuervorrichtungen (17A, 17B, 17C) gesetzt wurde, über das Kommunikationsnetzwerk (33), wenn das Batch-Überschreiben der Programme in Bezug auf die zumindest zwei der ersten, zweiten und dritten elektronischen Steuervorrichtungen (17A, 17B, 17C) festgelegt wird, wobei der externe Computer (201) Daten zum Überschreiben des Programms der zumindest zwei der ersten, zweiten und dritten elektronischen Steuervorrichtungen (17A, 17B, 17C) an die zumindest zwei der ersten, zweiten und dritten elektronischen Steuervorrichtungen (17A, 17B, 17C) mit der gemeinsamen Kennung für das Batch-Überschreiben überträgt, wenn die zumindest zwei der ersten, zweiten und dritten elektronischen Steuervorrichtungen (17A, 17B, 17C) die folgenden Bedingungen erfüllen:
zumindest zwei der ersten, zweiten und dritten elektronischen Steuervorrichtungen (17A, 17B, 17C) sind mit der Batch-Überschreibung kompatibel, das Programm ist nicht die neueste Version und die Häufigkeit der Überschreibung des Programms ist nicht größer als der vom externen Computer (201) gesetzte Wert (A1), der externe Computer (201) überträgt einen Befehl zur Aktualisierung der Häufigkeit der Überschreibung an die zumindest zwei der ersten, zweiten und dritten elektronischen Steuervorrichtungen (17A, 17B, 17C), die mit dem Batch-Überschreiben kompatibel sind, wobei, wenn die elektronische Steuervorrichtung (17A, 17B, 17C) feststellt, dass die Häufigkeit des Überschreibens nicht größer als der gesetzte Wert (A1) ist, die elektronische Steuervorrichtung (17A, 17B, 17C) das Überschreiben des Programms akzeptieren und eine positive Antwort an den externen Computer (201) überträgt, und der externe Computer (201) sendet eine Download-Anforderung an zumindest zwei der ersten, zweiten und dritten elektronischen Steuervorrichtungen (17A, 17B, 17C), die die positive Antwort an den externen Computer (201) übermitteln, und übermittelt aktualisierte Programmdaten an jede der ersten, zweiten und dritten elektronischen Steuervorrichtungen (17A, 17B, 17C), wobei die zumindest zwei der ersten, zweiten und dritten elektronischen Steuervorrichtungen (17A, 17B, 17C) das Programm auf der Grundlage der empfangenen Programmdaten überschreiben;
Übertragen der Daten zum Überschreiben der einzelnen Programme an die erste elektronische Steuervorrichtung (17A) mit einer ersten Kennung, die der ersten elektronischen Steuervorrichtung (17A) eindeutig zugewiesen ist, so dass sie sich von der gemeinsamen Kennung unterscheidet, wenn festgestellt wird, dass das Batch-Überschreiben der Programme in Bezug auf die erste elektronische Steuervorrichtung (17A) nicht ausgeführt wird; und
Übertragen der Daten zum Überschreiben der einzelnen Programme an die zweite elektronische Steuervorrichtung (17B) mit einer zweiten Kennung, die der zweiten elektronischen Steuervorrichtung (17B) eindeutig zugewiesen ist, so dass sie sich von der gemeinsamen Kennung unterscheidet, wenn festgestellt wird, dass das Batch-Überschreiben der Programme in Bezug auf die zweite elektronische Steuervorrichtung (17B) nicht ausgeführt wird.
Übertragen der Daten zum Überschreiben der einzelnen Programme an die dritte elektronische Steuervorrichtung (17C) mit einer dritten Kennung, die der dritten elektronischen Steuervorrichtung (17C) eindeutig zugewiesen ist, so dass sie sich von der gemeinsamen Kennung unterscheidet, wenn festgestellt wird, dass das Batch-Überschreiben der Programme in Bezug auf die dritte elektronische Steuervorrichtung (17C) nicht ausgeführt wird.

4. Ein Wasserfahrzeugsystem, das zum Einbau in ein Wasserfahrzeug (100) konfiguriert ist, wobei das Wasserfahrzeugsystem umfasst:
zumindest eine erste Wasserfahrzeugvortriebsvorrichtung (1A) mit einer ersten elektronischen Steuervorrichtung (17A);
zumindest eine zweite Wasserfahrzeugvortriebsvorrichtung (1B) mit einer zweiten elektronischen Steuervorrichtung (17B);
ein Kommunikationsnetzwerk (33), das die erste elektronische Steuervorrichtung (17A) und die zweite elektronische Steuervorrichtung (17B) miteinander verbindet; und
einen externen Computer (201), der an dem Wasserfahrzeugsystem angebracht ist, um ein Programm der ersten elektronischen Steuervorrichtung (17A) und ein Programm der zweiten elektronischen Steuervorrichtung (17B) zu überschreiben, wobei der Computer (201) mit dem Kommunikationsnetzwerk (33) verbunden ist, wobei
der externe Computer (201) so konfiguriert ist, um
zu bestimmen, ob ein Batch-Überschreiben der Programme in Bezug auf die erste und die zweite elektronische Steuervorrichtung (17A, 17B) durchgeführt werden soll oder nicht,
Informationen über die elektronischen Steuervorrichtungen von jeder der ersten und zweiten elektronischen Steuervorrichtungen (17A, 17B) abzurufen,
zu bestimmen, ob jede der ersten und zweiten elektronischen Steuervorrichtungen (17A, 17B) mit dem Batch-Überschreiben kompatibel ist;
Daten zum Überschreiben jedes der Programme an jedes der ersten und zweiten elektronischen Steuergeräte (17A, 17B) mit einer gemeinsamen Kennung, die vorab für jedes der ersten und zweiten elektronischen Steuergeräte (17A, 17B) gesetzt wurde, über das Kommunikationsnetzwerk (33) zu übertragen, wenn die Batch-Überschreibung der Programme in Bezug auf jede der ersten und zweiten elektronischen Steuervorrichtungen (17A, 17B) festgelegt wurde;
Daten zum Überschreiben des Programms jedes der ersten und zweiten elektronischen Steuerungsvorrichtungen (17A, 17B) an jede der ersten und zweiten elektronischen Steuerungsvorrichtungen (17A, 17B) mit der gemeinsamen Kennung für das Batch-Überschreiben zu übertragen, wenn jede der ersten und zweiten elektronischen Steuerungsvorrichtungen (17A, 17B) die folgenden Bedingungen erfüllt:
jede der ersten und zweiten elektronischen Steuervorrichtungen (17A, 17B) ist mit dem Batch-Überschreiben kompatibel, das Programm ist nicht die neueste Version und die Häufigkeit des Überschreibens des Programms ist nicht größer als der vom externen Computer (201) gesetzte Wert (A1),
Übertragen eines Befehls zum Aktualisieren der Häufigkeit des Überschreibens an jede der ersten und zweiten elektronischen Steuervorrichtungen (17A, 17B), die mit dem Batch-Überschreiben kompatibel sind, wobei, wenn die elektronische Steuervorrichtung (17A, 17B) feststellt, dass die Häufigkeit des Überschreibens nicht größer als der gesetzte Wert (A1) ist, die elektronische Steuervorrichtung (17A, 17B) das Überschreiben des Programms akzeptiert und eine positive Antwort an den externen Computer (201) sendet, und der externe Computer (201) eine Download-Anforderung an die erste und zweite elektronische Steuervorrichtung (17A, 17B), die die positive Antwort an den externen Computer (201) übermitteln, und übermittelt aktualisierte Programmdaten an jede der ersten und zweiten elektronischen Steuervorrichtungen (17A, 17B), und jede der ersten und zweiten elektronischen Steuervorrichtungen (17A, 17B) überschreibt das Programm auf der Grundlage der empfangenen Programmdaten um;
der externe Computer (201) ist ferner so konfiguriert, dass er die Daten zum Überschreiben jedes der Programme an die erste elektronische Steuervorrichtung (17A) mit einer ersten Kennung überträgt, die der ersten elektronischen Steuervorrichtung (17A) eindeutig zugewiesen ist, so dass sie sich von der gemeinsamen Kennung unterscheidet, wenn festgestellt wird, dass das Batch-Überschreiben der Programme in Bezug auf die erste elektronische Steuervorrichtung (17A) nicht ausgeführt wird, und
die Daten zum Überschreiben der einzelnen Programme an die zweite elektronische Steuervorrichtung (17B) mit einer zweiten Kennung überträgt, die der zweiten elektronischen Steuervorrichtung (17B) eindeutig zugewiesen ist, so dass sie sich von der gemeinsamen Kennung unterscheidet, wenn festgestellt wird, dass das Batch-Überschreiben der Programme in Bezug auf die zweite elektronische Steuervorrichtung (17B) nicht ausgeführt wird.

5. Das Wasserfahrzeugsystem gemäß Anspruch 4, wobei der externe Computer (201) so konfiguriert ist, dass er
eine Version eines Protokolls zum Überschreiben der einzelnen Programme von dem ersten und dem zweiten elektronischen Steuergerät (17A, 17B) erhält und
auf der Grundlage der Version des Protokolls bestimmt, ob das Batch-Überschreiben der Programme in Bezug auf die erste und die zweite elektronische Steuervorrichtung (17A, 17B) ausgeführt werden soll oder nicht.

6. Das Wasserfahrzeugsystem nach Anspruch 4 oder 5, wobei das Wasserfahrzeugsystem ferner eine dritte erste Wasserfahrzeugvortriebsvorrichtung (1C) enthält, wobei die dritte Wasserfahrzeugvortriebsvorrichtung (1C) eine dritte elektronische Steuervorrichtung (17C) enthält, wobei das Kommunikationsnetzwerk (33) die erste elektronische Steuervorrichtung (17A), die zweite elektronische Steuervorrichtung (17B) und die dritte elektronische Steuervorrichtung (17C) miteinander verbindet, wobei der Computer (201) so konfiguriert ist, um zu bestimmen, ob eine Batch-Überschreibung der Programme in Bezug auf jede der ersten, zweiten und dritten elektronischen Steuervorrichtungen (17A, 17B, 17C) ausgeführt werden soll oder nicht,
elektronische Steuergeräteinformationen von jedem der ersten, zweiten und dritten elektronischen Steuergeräte (17A, 17B, 17C) zu erhalten,
zu bestimmen, ob zumindest zwei der ersten, zweiten und dritten elektronischen Steuerungsvorrichtungen (17A, 17B, 17C) mit dem Batch-Überschreiben kompatibel sind;
Übertragen von Daten zum Überschreiben jedes der Programme an zumindest zwei der ersten, zweiten und dritten elektronischen Steuervorrichtungen (17A, 17B, 17C) mit einer gemeinsamen Kennung, die vorab auf die zumindest zwei der ersten, zweiten und dritten elektronischen Steuervorrichtungen (17A, 17B, 17C) über das Kommunikationsnetzwerk (33) festgelegt wurde, wenn das Batch-Überschreiben der Programme in Bezug auf die zumindest zwei der ersten, zweiten und dritten elektronischen Steuervorrichtungen (17A, 17B, 17C) ausgeführt werden soll; Übertragen von Daten zum Überschreiben des Programms der zumindest zwei der ersten, zweiten und dritten elektronischen Steuervorrichtungen (17A, 17B, 17C) an die zumindest zwei der ersten, zweiten und dritten elektronischen Steuervorrichtungen (17A, 17B, 17C) mit der gemeinsamen Kennung für das Batch-Überschreiben, wenn die zumindest zwei der ersten, zweiten und dritten elektronischen Steuervorrichtungen (17A, 17B, 17C) die folgenden Bedingungen erfüllen:
zumindest zwei der ersten, zweiten und dritten elektronischen Steuervorrichtungen (17A, 17B, 17C) sind mit dem Batch-Überschreiben kompatibel, das Programm ist nicht die neueste Version und die Häufigkeit des Überschreibens des Programms ist nicht größer als der vom externen Computer (201) gesetzte Wert (A1),
Übertragen eines Befehls zum Aktualisieren der Häufigkeit des Überschreibens an die zumindest zwei der ersten, zweiten und dritten elektronischen Steuervorrichtungen (17A, 17B, 17C), die mit dem Batch-Überschreiben kompatibel sind, wobei, wenn die elektronische Steuervorrichtung (17A, 17B, 17C) feststellt, dass die Häufigkeit des Überschreibens nicht größer als der gesetzte Wert (A1) ist, die elektronische Steuervorrichtung (17A, 17B, 17C) das Überschreiben des Programms akzeptiert und eine positive Antwort an den externen Computer (201) überträgt, und der externe Computer (201) eine Download-Anforderung an die zumindest zwei der ersten, zweiten und dritten elektronischen Steuervorrichtungen (17A, 17B, 17C), die die positive Antwort an den externen Computer (201) übermitteln, und übermittelt aktualisierte Programmdaten an jede der ersten, zweiten und dritten elektronischen Steuervorrichtungen (17A, 17B, 17C), wobei die zumindest zwei der ersten, zweiten und dritten elektronischen Steuervorrichtungen (17A, 17B, 17C) das Programm auf der Grundlage der empfangenen Programmdaten überschreiben;
Übertragen der Daten zum Überschreiben der einzelnen Programme an die erste elektronische Steuervorrichtung (17A) mit einer ersten Kennung, die der ersten elektronischen Steuervorrichtung (17A) eindeutig zugewiesen ist, so dass sie sich von der gemeinsamen Kennung unterscheidet, wenn festgestellt wird, dass das Batch-Überschreiben der Programme in Bezug auf die erste elektronische Steuervorrichtung (17A) nicht ausgeführt wird; und
Übertragen der Daten zum Überschreiben der einzelnen Programme an die zweite elektronische Steuervorrichtung (17B) mit einer zweiten Kennung, die der zweiten elektronischen Steuervorrichtung (17B) eindeutig zugewiesen ist, so dass sie sich von der gemeinsamen Kennung unterscheidet, wenn festgestellt wird, dass das Batch-Überschreiben der Programme in Bezug auf die zweite elektronische Steuervorrichtung (17B) nicht ausgeführt wird.
Übertragen der Daten zum Überschreiben der einzelnen Programme an die dritte elektronische Steuervorrichtung (17C) mit einer dritten Kennung, die der dritten elektronischen Steuervorrichtung (17C) eindeutig zugewiesen ist, so dass sie sich von der gemeinsamen Kennung unterscheidet, wenn festgestellt wird, dass das Batch-Überschreiben der Programme in Bezug auf die dritte elektronische Steuervorrichtung (17C) nicht ausgeführt wird.

## Revendications

1. Procédé de réécriture d'un programme d'au moins un premier dispositif de contrôle électronique (17A) et d'un programme d'au moins un deuxième dispositif de contrôle électronique (17B) dans un système pour embarcation configuré pour être installé dans une embarcation (100), le système pour embarcation incluant au moins un premier dispositif de propulsion marine (1A), au moins un deuxième dispositif de propulsion marine (1B) et un réseau de communication (33), le premier dispositif de propulsion marine (1A) incluant le premier dispositif de contrôle électronique (17A), le deuxième dispositif de propulsion marine (1B) incluant le deuxième dispositif de contrôle électronique (17B), le réseau de communication (33) connectant le premier dispositif de contrôle électronique (17A) et le deuxième dispositif de contrôle électronique (17B), le procédé comprenant :
la détermination, par un ordinateur externe (201), du fait qu'il faut ou non exécuter une réécriture par lots des programmes concernant chacun desdits premier et deuxième dispositifs de contrôle électronique (17A, 17B), dans lequel l'ordinateur externe (201) obtient de l'information de dispositif de contrôle électronique auprès de chacun desdits premier et deuxième dispositifs de contrôle électronique (17A, 17B) et détermine si chacun desdits premier et deuxième dispositifs de contrôle électronique (17A, 17B) est compatible ou non avec une réécriture par lots ;
la transmission des données de réécriture de chacun des programmes à chacun desdits premier et deuxième dispositifs de contrôle électronique (17A, 17B) avec un identifiant commun défini préalablement pour chacun desdits premier et deuxième dispositifs de contrôle électronique (17A, 17B) via le réseau de communication (33) quand la réécriture par lots des programmes est déterminée comme devant être exécutée pour chacun desdits premier et deuxième dispositifs de contrôle électronique (17A, 17B), dans lequel l'ordinateur externe (201) transmet des données de réécriture du programme de chacun desdits premier et
deuxième dispositifs de contrôle électronique (17A, 17B) à chacun desdits premier et deuxième dispositifs de contrôle électronique (17A, 17B) avec l'identifiant commun pour la réécriture par lots quand chacun desdits premier et
deuxième dispositifs de contrôle électronique (17A, 17B) satisfait aux conditions suivantes : chacun desdits premier et deuxième dispositifs de contrôle électronique (17A, 17B) est compatible avec la réécriture par lots, la version du programme n'est pas la dernière version, et la fréquence de réécriture du programme n'est pas supérieure à la valeur de consigne (A1) définie par l'ordinateur externe (201),
l'ordinateur externe (201) transmet une commande pour mettre à jour la fréquence de réécriture à chacun desdits premier et deuxième dispositifs de contrôle électronique (17A, 17B) compatible avec la réécriture par lots, dans lequel, quand le dispositif de contrôle électronique (17A, 17B) détermine que la fréquence de réécriture n'est pas supérieure à la valeur de consigne (A1), le dispositif de contrôle électronique (17A, 17B) accepte la réécriture du programme et transmet une réponse positive à l'ordinateur externe (201), et l'ordinateur externe (201) transmet une demande de téléchargement à chacun desdits premier et deuxième dispositifs de contrôle électronique (17A, 17B), qui transmettent la réponse positive à l'ordinateur externe (201) et transmettent les données de programme mises à jour à chacun desdits premier et deuxième dispositifs de contrôle électronique (17A, 17B), et chacun desdits premier et deuxième dispositifs de contrôle électronique (17A, 17B) réécrit le programme sur la base des données de programme reçues ;
la transmission des données de réécriture de chacun desdits programmes au premier dispositif de contrôle électronique (17A) avec un premier identifiant attribué de manière unique au premier dispositif de contrôle électronique (17A) de manière à être différent de l'identifiant commun quand la réécriture par lots des programmes est déterminée comme ne devant pas être exécutée pour le premier dispositif de contrôle électronique (17A) ; et
la transmission des données de réécriture de chacun desdits programmes au deuxième dispositif de contrôle électronique (17B) avec un deuxième identifiant attribué de manière unique au deuxième dispositif de contrôle électronique (17B) de manière à être différent de l'identifiant commun quand la réécriture par lots des programmes est déterminée comme ne devant pas être exécutée pour le deuxième dispositif de contrôle électronique (17B).

2. Procédé selon la revendication 1, comprenant en outre :
l'obtention de la version d'un protocole pour réécrire chacun desdits programmes auprès de chacun desdits premier et deuxième dispositifs de contrôle électronique (17A, 17B) ; et
la détermination du fait qu'il faut ou non exécuter la réécriture par lots des programmes pour chacun desdits premier et deuxième dispositifs de contrôle électronique (17A, 17B) sur la base de la version du protocole.

3. Procédé selon la revendication 1 ou 2, dans lequel le système pour embarcation inclut en outre un troisième dispositif de propulsion marine (1C), le troisième dispositif de propulsion marine (1C) incluant un troisième dispositif de contrôle électronique (17C), le réseau de communication (33) connectant le premier dispositif de contrôle électronique (17A), le deuxième dispositif de contrôle électronique (17B) et le troisième dispositif de contrôle électronique (17C), le procédé comprenant :
la détermination, par l'ordinateur externe (201), du fait qu'il faut ou non exécuter la réécriture par lots des programmes pour chacun desdits premier, deuxième et troisième dispositifs de contrôle électronique (17A, 17B, 17C), dans lequel l'ordinateur externe (201) obtient de l'information de dispositif de contrôle électronique auprès de chacun desdits premier, deuxième et troisième dispositifs de contrôle électronique (17A, 17B, 17C) et
détermine si au moins deux des premier, deuxième et troisième dispositifs de contrôle électronique (17A, 17B, 17C) sont compatibles ou non avec une réécriture par lots ;
la transmission des données de réécriture de chacun des programmes à au moins deux des premier, deuxième et troisième dispositifs de contrôle électronique (17A, 17B, 17C) avec un identifiant commun préalablement défini pour lesdits au moins deux des premier, deuxième et troisième dispositifs de contrôle électronique (17A, 17B, 17C) via le réseau de communication (33) quand la réécriture par lots des programmes est déterminée comme devant être exécutée pour lesdits au moins deux des premier, deuxième et troisième dispositifs de contrôle électronique (17A, 17B, 17C), dans lequel l'ordinateur externe (201) transmet des données de réécriture du programme desdits au moins deux des premier, deuxième et troisième dispositifs de contrôle électronique (17A, 17B, 17C) auxdits au moins deux des premier, deuxième et troisième dispositifs de contrôle électronique (17A, 17B, 17C) avec l'identifiant commun pour la réécriture par lots quand lesdits au moins deux des premier, deuxième et troisième dispositifs de contrôle électronique (17A, 17B, 17C) satisfont aux conditions suivantes : au moins deux des premier, deuxième et
troisième dispositifs de contrôle électronique (17A, 17B, 17C) sont compatibles avec la réécriture par lots, la version du programme n'est pas la dernière version, et la fréquence de réécriture du programme n'est pas supérieure à la valeur de consigne (A1) définie par l'ordinateur externe (201), l'ordinateur externe (201) transmet une commande pour mettre à jour la fréquence de réécriture desdits au moins deux des premier, deuxième et troisième dispositifs de contrôle électronique (17A, 17B, 17C) compatibles avec la réécriture par lots, dans lequel, quand le dispositif de contrôle électronique (17A, 17B, 17C) détermine que la fréquence de réécriture n'est pas supérieure à la valeur de consigne (A1), le dispositif de contrôle électronique (17A, 17B, 17C) accepte la réécriture du programme et transmet une réponse positive à l'ordinateur externe (201), et l'ordinateur externe (201) transmet une demande de téléchargement auxdits au moins deux des premier, deuxième et troisième dispositifs de contrôle électronique (17A, 17B, 17C) qui transmettent la réponse positive à l'ordinateur externe (201) et transmettent les données de programme mises à jour à chacun desdits premier, deuxième et troisième dispositifs de contrôle électronique (17A, 17B, 17C), lesdits au moins deux des premier, deuxième et troisième dispositifs de contrôle électronique (17A, 17B, 17C) réécrivent le programme sur la base des données de programme reçues ;
la transmission des données de réécriture de chacun desdits programmes au premier dispositif de contrôle électronique (17A) avec un premier identifiant attribué de manière unique au premier dispositif de contrôle électronique (17A) de manière à être différent de l'identifiant commun quand la réécriture par lots des programmes est déterminée comme ne devant pas être exécutée pour le premier dispositif de contrôle électronique (17A) ;
la transmission des données de réécriture de chacun desdits programmes au deuxième dispositif de contrôle électronique (17B) avec un deuxième identifiant attribué de manière unique au deuxième dispositif de contrôle électronique (17B) de manière à être différent de l'identifiant commun quand la réécriture par lots des programmes est déterminée comme ne devant pas être exécutée pour le deuxième dispositif de contrôle électronique (17B) ; et
la transmission des données de réécriture de chacun desdits programmes au troisième dispositif de contrôle électronique (17C) avec un troisième identifiant attribué de manière unique au troisième dispositif de contrôle électronique (17C) de manière à être différent de l'identifiant commun quand la réécriture par lots des programmes est déterminée comme ne devant pas être exécutée pour le troisième dispositif de contrôle électronique (17C).

4. Système pour embarcation configuré pour être installé dans une embarcation (100), le système pour embarcation comprenant :
au moins un premier dispositif de propulsion marine (1A) incluant un premier dispositif de contrôle électronique (17A) ;
au moins un deuxième dispositif de propulsion marine (1B) incluant un deuxième dispositif de contrôle électronique (17B) ;
un réseau de communication (33) connectant le premier dispositif de contrôle électronique (17A) et le deuxième dispositif de contrôle électronique (17B) ; et
un ordinateur externe (201) attaché au système pour embarcation pour réécrire un programme du premier dispositif de contrôle électronique (17A) et un programme du deuxième dispositif de contrôle électronique (17B), l'ordinateur (201) étant connecté au réseau de communication (33),
dans lequel l'ordinateur externe (201) est configuré pour
déterminer s'il faut ou non exécuter la réécriture par lots des programmes pour chacun desdits premier et deuxième dispositifs de contrôle électronique (17A, 17B) ;
obtenir de l'information de dispositif de contrôle électronique auprès de chacun desdits premier et deuxième dispositifs de contrôle électronique (17A, 17B) ;
déterminer si chacun desdits premier et deuxième dispositifs de contrôle électronique (17A, 17B) est compatible ou non avec la réécriture par lots ;
transmettre les données de réécriture de chacun des programmes à chacun desdits premier et deuxième dispositifs de contrôle électronique (17A, 17B) avec un identifiant commun défini préalablement pour chacun desdits premier et deuxième dispositifs de contrôle électronique (17A, 17B) via le réseau de communication (33) quand la réécriture par lots des programmes est déterminée comme devant être exécutée pour chacun desdits premier et deuxième dispositifs de contrôle électronique (17A, 17B) ;
transmettre les données de réécriture du programme de chacun desdits premier et deuxième dispositifs de contrôle électronique (17A, 17B) à chacun desdits premier et deuxième dispositifs de contrôle électronique (17A, 17B) avec l'identifiant commun pour la réécriture par lots quand chacun desdits premier et deuxième dispositifs de contrôle électronique (17A, 17B) satisfait aux conditions suivantes : chacun desdits premier et deuxième dispositifs de contrôle électronique (17A, 17B) est compatible avec la réécriture par lots, la version du programme n'est pas la dernière version, et la fréquence de réécriture du programme n'est pas supérieure à la valeur de consigne (A1) définie par l'ordinateur externe (201) ;
transmettre une commande pour mettre à jour la fréquence de réécriture à chacun desdits premier et deuxième dispositifs de contrôle électronique (17A, 17B) compatibles avec la réécriture par lots, dans lequel, quand le dispositif de contrôle électronique (17A, 17B) détermine que la fréquence de réécriture n'est pas supérieure à la valeur de consigne (A1), le dispositif de contrôle électronique (17A, 17B) accepte la réécriture du programme et transmet une réponse positive à l'ordinateur externe (201), et l'ordinateur externe (201) transmet une demande de téléchargement à chacun desdits premier et deuxième dispositifs de contrôle électronique (17A, 17B) qui transmettent la réponse positive à l'ordinateur externe (201) et transmettent des données de programme mises à jour à chacun desdits premier et deuxième dispositifs de contrôle électronique (17A, 17B), et chacun desdits premier et deuxième dispositifs de contrôle électronique (17A, 17B) réécrit le programme sur la base des données de programme reçues, l'ordinateur externe (201) étant en outre configuré pour transmettre les données de réécriture de chacun desdits programmes au premier dispositif de contrôle électronique (17A) avec un premier identifiant attribué de manière unique au premier dispositif de contrôle électronique (17A) de manière à être différent de l'identifiant commun quand la réécriture par lots des programmes est déterminée comme ne devant pas être exécutée pour le premier dispositif de contrôle électronique (17A) ; et
transmettre les données de réécriture de chacun desdits programmes au deuxième dispositif de contrôle électronique (17B) avec un deuxième identifiant attribué de manière unique au deuxième dispositif de contrôle électronique (17B) de manière à être différent de l'identifiant commun quand la réécriture par lots des programmes est déterminée comme ne devant pas être exécutée pour le deuxième dispositif de contrôle électronique (17B).

5. Système pour embarcation selon la revendication 4, dans lequel l'ordinateur externe (201) est configuré pour
obtenir une version d'un protocole pour réécrire chacun desdits programmes auprès de chacun desdits premier et deuxième dispositifs de contrôle électronique (17A, 17B), et déterminer s'il faut ou non exécuter la réécriture par lots des programmes pour chacun desdits premier et deuxième dispositifs de contrôle électronique (17A, 17B) sur la base de la version du protocole.

6. Système pour embarcation selon la revendication 4 ou 5, dans lequel le système pour embarcation inclut en outre un troisième dispositif de propulsion marine (1C), le troisième dispositif de propulsion marine (1C) incluant un troisième dispositif de contrôle électronique (17C), le réseau de communication (33) connectant le premier dispositif de contrôle électronique (17A), le deuxième dispositif de contrôle électronique (17B) et le troisième dispositif de contrôle électronique (17C), dans lequel l'ordinateur (201) est configuré pour
déterminer s'il faut ou non exécuter la réécriture par lots des programmes pour chacun desdits premier, deuxième et troisième dispositifs de contrôle électronique (17A, 17B, 17C) ;
obtenir de l'information de dispositif de contrôle électronique auprès de chacun desdits premier, deuxième et troisième dispositifs de contrôle électronique (17A, 17B, 17C) 7 ;
déterminer si au moins deux des premier, deuxième et troisième dispositifs de contrôle électronique (17A, 17B, 17C) sont compatibles ou non avec la réécriture par lots ;
transmettre les données de réécriture de chacun des programmes à au moins deux des premier, deuxième et troisième dispositifs de contrôle électronique (17A, 17B, 17C) avec un identifiant commun préalablement défini pour lesdits au moins deux des premier, deuxième et troisième dispositifs de contrôle électronique (17A, 17B, 17C) via le réseau de communication (33) quand la réécriture par lots des programmes est déterminée comme devant être exécutée pour lesdits au moins deux des premier, deuxième et troisième dispositifs de contrôle électronique (17A, 17B, 17C) ;
transmettre les données de réécriture du programme desdits au moins deux des premier, deuxième et troisième dispositifs de contrôle électronique (17A, 17B, 17C) auxdits au moins deux des premier, deuxième et troisième dispositifs de contrôle électronique (17A, 17B, 17C) avec l'identifiant commun pour la réécriture par lots quand lesdits au moins deux des premier, deuxième et troisième dispositifs de contrôle électronique (17A, 17B, 17C) satisfont aux conditions suivantes : au moins deux des premier, deuxième et troisième dispositifs de contrôle électronique (17A, 17B, 17C) sont compatibles avec la réécriture par lots, la version du programme n'est pas la dernière version, et la fréquence de réécriture du programme n'est pas supérieure à la valeur de consigne (A1) définie par l'ordinateur externe (201) ;
transmettre une commande de mise à jour de la fréquence de réécriture auxdits au moins deux des premier, deuxième et troisième dispositifs de contrôle électronique (17A, 17B, 17C) compatibles avec la réécriture par lots, dans lequel, quand le dispositif de contrôle électronique (17A, 17B, 17C) détermine que la fréquence de réécriture n'est pas supérieure à la valeur de consigne (A1), le dispositif de contrôle électronique (17A, 17B, 17C) accepte la réécriture du programme et transmet une réponse positive à l'ordinateur externe (201), l'ordinateur externe (201) transmet une demande de téléchargement auxdits au moins deux des premier, deuxième et troisième dispositifs de contrôle électronique (17A, 17B, 17C), qui transmettent la réponse positive à l'ordinateur externe (201) et transmettent des données de programme mises à jour à chacun desdits premier, deuxième et troisième dispositifs de contrôle électronique (17A, 17B, 17C), et lesdits au moins deux des premier, deuxième et troisième dispositifs de contrôle électronique (17A, 17B, 17C) réécrivent le programme sur la base des données de programme reçues ;
transmettre les données de réécriture de chacun desdits programmes au premier dispositif de contrôle électronique (17A) avec un premier identifiant attribué de manière unique au premier dispositif de contrôle électronique (17A) de manière à être différent de l'identifiant commun quand la réécriture par lots des programmes est déterminée comme ne devant pas être exécutée pour le premier dispositif de contrôle électronique (17A) ;
transmettre les données de réécriture de chacun desdits programmes au deuxième dispositif de contrôle électronique (17B) avec un deuxième identifiant attribué de manière unique au deuxième dispositif de contrôle électronique (17B) de manière à être différent de l'identifiant commun quand la réécriture par lots des programmes est déterminée comme ne devant pas être exécutée pour le deuxième dispositif de contrôle électronique (17B) ; et
transmettre les données de réécriture de chacun desdits programmes au troisième dispositif de contrôle électronique (17C) avec un troisième identifiant attribué de manière unique au troisième dispositif de contrôle électronique (17C) de manière à être différent de l'identifiant commun quand la réécriture par lots des programmes est déterminée comme ne devant pas être exécutée pour le troisième dispositif de contrôle électronique (17C).
